# EUROPEAN PATENT APPLICATION

(11) **EP 4 852 142 A1**
(43) Date of publication of application: **09.12.2026**
(21) Application number: 25793990.0
(22) Date of filing: 23.04.2025
(51) Int. Cl.: H01M 10/613, H01M 10/6557, H01M 10/6555, H01M 10/6567

(54) **BATTERY APPARATUS AND ELECTRICAL APPARATUS**

(30) Priority: 24.04.2024 CN 202410501046; 24.04.2024 CN 202420869133 U; 06.12.2024 CN 202411793200
(71) Applicant: Contemporary Amperex Technology Co., Limited, Ningde, Fujian 352100 (CN)
(72) Inventor: HOU, Yuepan, Ningde, Fujian 352100 (CN); ZHOU, Cong, Ningde, Fujian 352100 (CN)
(74) Representative: Ran, Handong
(86) International application number: PCT/CN2025/090744
(87) International publication number: WO 2025/223480

(57) **Abstract**

A battery apparatus (100) and an electrical apparatus (1000). The battery apparatus comprises: a box body (10); a battery cell assembly (20) accommodated within the box body; and a heat exchange assembly (30) accommodated within the box body and in heat exchange with the battery cell assembly. The heat exchange assembly comprises: a heat exchange main body (31), comprising a plurality of heat exchange flow channels (301); and a flow collecting structure disposed at both ends of the heat exchange main body in a first direction, each flow collecting structure comprising a blocking member (321), an adapter (323), and a flow collecting member (322). The blocking member comprises a connecting portion (3211) and at least two blocking portions (3212). The at least two blocking portions are connected by means of the connecting portion, and the at least two blocking portions are configured to be able to block at least two of the heat exchange flow channels. The adapter is formed on the heat exchange main body. A flow collecting chamber (3221) is formed in the interior of the flow collecting member. The flow collecting member is sealingly fitted and connected to the heat exchange main body by means of the adapter, and the flow collecting member is provided with a communication port (322a) in communication with the flow collecting chamber.

## Description

### CROSS-REFERENCE TO RELATED APPLICATIONS

The present application claims priority to Chinese Patent Application No. 202411793200.7, filed on December 06, 2024, Chinese Patent Application No. 202420869133.1, filed on April 24, 2024, and Chinese Patent Application No. 202410501046.5, filed on April 24, 2024, which are incorporated herein by reference in their entireties.

### TECHNICAL FIELD

The present application relates to the field of battery technologies, and in particular, to a battery apparatus and an electrical apparatus.

### BACKGROUND

In recent years, new energy vehicles have made a leap forward in development. In the field of electric vehicles, battery apparatuses, as the power source of electric vehicles, play an irreplaceable and important role. The battery apparatus is composed of an enclosure and a plurality of battery cells accommodated in the enclosure. The battery cells in the battery apparatus generate a large amount of heat during continuous charging and discharging use. A heat exchange assembly is usually required to be disposed inside the battery apparatus for heat exchange, so as to regulate the temperature inside the battery apparatus. However, the reliability of the heat exchange assembly affects the reliability of the battery apparatus to a large extent. Therefore, how to further improve the reliability of the battery apparatus has become one of the urgent problems to be resolved currently.

### SUMMARY

Embodiments of the present application provide a battery apparatus and an electrical apparatus, so as to effectively improve the reliability of a heat exchange assembly and thus improve the reliability of the battery apparatus and the electrical apparatus.

According to a first aspect, an embodiment of the present application provides a battery apparatus, including: an enclosure; a battery cell assembly, accommodated in the enclosure; a heat exchange assembly, accommodated in the enclosure and exchanging heat with the battery cell assembly. The heat exchange assembly includes: a heat exchange body, including a plurality of heat exchange channels extending along a first direction; and manifold structures, disposed at two ends of the heat exchange body in the first direction, where the manifold structure includes a plugging member, an adapter member, and a manifold. The plugging member includes a connection portion and at least two plugging portions, the at least two plugging portions are connected through the connection portion, and the at least two plugging portions are configured to be fitted into at least two heat exchange channels. The adapter member is formed on the heat exchange body. A manifold cavity is formed inside the manifold, and the manifold is sealingly engaged and connected with the heat exchange body through the adapter member, such that the manifold cavity is in communication with the heat exchange channel. The manifold is provided with a communication port communicating with the manifold cavity, and the communication port is configured for entry and exit of a heat exchange medium, such that the heat exchange medium is allowed to flow between the manifold cavity and the heat exchange channels.

In the battery apparatus of the above structure, by configuring the heat exchange assembly to include a heat exchange body and manifold structures, and configuring the manifold structure to include the plugging member, the manifold, and the adapter member, when the heat exchange body is connected to the manifold structure, the adapter member is formed on the heat exchange body, and then the manifold is connected, whereby the manifold is not directly connected to the heat exchange body. During formation of the adapter member, the adapter member can relatively easily conform to the size and shape of the heat exchange body, and can be matched with the size and shape of the manifold in advance, thereby reducing the mounting difficulty among the heat exchange body, the manifold, and the adapter member, improving connection reliability, reducing the risk of leakage, and improving the reliability of the battery apparatus. By configuring the plugging member to include the connection portion and at least two plugging portions, the at least two plugging portions being connected through the connection portion, the connection portion can play a limiting role on the plugging portions, thereby reducing the risk of displacement or deformation of the plugging portions during formation of the adapter member. This helps to improve the plugging and sealing effect of the plugging portions against the corresponding heat exchange channel, so as to meet the heat exchange design requirements of the heat exchange assembly. In addition, this helps to improve the forming quality of the adapter member, and improve the connection strength and reliability between the adapter member and the heat exchange body, thereby improving the reliability of the heat exchange assembly and improving the reliability of the battery apparatus.

In some embodiments of the present application, the plugging portion has an outer side surface close to the manifold, and on a reference plane parallel to the outer side surface, an area of an orthographic projection of the connection portion on the reference plane is smaller than an area of the outer side surface.

In the above technical solution, with the above structure, dimensions of a part of the connection portion corresponding to the plugging portion are smaller than dimensions of the plugging portion. During formation of the adapter member on the heat exchange body, a larger bonding surface is provided between a material forming the adapter member and the outer side surface, thereby improving the bonding strength and connection reliability among the plugging portion, the adapter member, and the heat exchange body, enhancing the plugging and sealing effect of the plugging portion on the heat exchange channel, improving the reliability of the heat exchange assembly, and thus improving the reliability of the battery apparatus. The above structure can also reduce the amount of material used and reduce the weight of the plugging member on the basis that the at least two plugging portions are integrally formed as a single piece through the connection portion, which helps to improve the energy density of the battery apparatus.

In some embodiments of the present application, a dimension of the heat exchange body in the first direction and a dimension of the heat exchange body in a third direction are both greater than a dimension in a second direction, the plurality of heat exchange channels are spaced along the third direction, in the second direction, a dimension of the connection portion is smaller than a dimension of the plugging portion, and the first direction, the second direction, and the third direction are perpendicular to each other.

In the above technical solution, the heat exchange body may be formed as a plate-like structure with a relatively small thickness, and is more easily in contact with a surface of the battery cell assembly for heat exchange, thereby helping to save space inside the enclosure. In this way, a larger arrangement space can be provided for the battery cell assembly, thereby improving the energy density of the battery apparatus. A larger arrangement space can also be provided for other electrical components, facilitating mounting of components inside the enclosure, reducing the mounting difficulty, and facilitating maintenance and repair. Each plugging portion has a region not covered by the connection portion. During formation of the adapter member on the heat exchange body, each plugging portion can have a larger bonding surface with the adapter member, such that the plugging member as an entirety has a larger bonding surface with the adapter member, thereby improving the connection strength and reliability. Moreover, more of an edge of each plugging portion cooperating with the heat exchange channel is exposed, such that the adapter member can cover more of the edge of the plugging portion during the formation, thereby enhancing the plugging and sealing effect of the plugging portion on the heat exchange channel, and thus improving the reliability of the heat exchange assembly and improving the reliability of the battery apparatus.

In some embodiments of the present application, the connection portion and the plugging portion are detachably connected. By adopting the above solution, the connection portion and the plugging portion can be manufactured separately. After the connection portion and the plugging portion are manufactured separately, the two are assembled, thereby reducing the manufacturing difficulty of the plugging member, improving the product yield, and when one of the connection portion and the plugging portion is damaged, only the damaged part needs to be replaced, thereby reducing the cost of use.

In some embodiments of the present application, one of the connection portion and the plugging portion is provided with a snap protrusion portion, and the other is provided with a snap groove portion, where the snap groove portion and the snap protrusion portion are snap-fitted with each other. In this technical solution, the connection portion and the plugging portion may be snap-fitted with each other through the snap groove portion and the snap protrusion portion. The above detachable connection structure has a relatively simple structure, facilitates mounting and detachment, and provides reliable connection, thereby improving the connection reliability between the connection portion and the plugging portion.

In some embodiments of the present application, the snap protrusion portion or the snap groove portion is provided at two opposite ends of the connection portion. In this technical solution, the two opposite ends of the connection portion can be connected to the plugging portion through engagement of the snap groove portion with the snap protrusion portion. In this way, the connection portion and the plugging portion can be fixed at opposite sides thereof, thereby providing a more stable and balanced fixing effect and further improving the connection reliability between the connection portion and the plugging portion.

In some embodiments of the present application, the snap protrusion portion is provided on the connection portion, and the snap groove portion is provided on the plugging portion. In this technical solution, since the plugging portion plugs the heat exchange channel, considering that the adapter member is required to wrap around the heat exchange body, the plugging portion has a larger dimension than the connection portion. Therefore, providing the snap groove portion on the plugging portion may facilitate the processing of the snap groove portion and reduce the manufacturing difficulty.

In some embodiments of the present application, one of the connection portion and the plugging portion is provided with a guide groove, and the other is provided with a guide post, the guide post being disposed in the guide groove. In this technical solution, during connection, the positioning accuracy of the connection portion and the plugging portion can be improved through the guiding effect of the guide groove and the guide post, thereby improving the success rate of engagement between the snap protrusion portion and the snap groove portion, and thus improving the assembly efficiency.

In some embodiments of the present application, the guide post is provided on the connection portion, and the guide groove is provided on the plugging portion. In this technical solution, since the plugging portion plugs the heat exchange channel, considering that the adapter member is required to wrap around the heat exchange body, the plugging portion has a larger dimension than the connection portion. Therefore, providing the guide groove on the plugging portion may facilitate the processing of the guide groove and reduce the manufacturing difficulty.

In some embodiments of the present application, any adjacent two plugging portions are detachably connected through the connection portion.

In the above technical solution, when the number of plugging portions is relatively large, a plurality of plugging portions can be sequentially connected together through a plurality of connection portions, the connection mode is more flexible, and each plugging portion and connection portion is easier to operate during assembly, thereby reducing the assembly difficulty. When a fault occurs in a heat exchange channel corresponding to a certain plugging portion, the connection between adjacent two plugging portions through the connection portion enables the faulty part to be processed more accurately. Only the connection portion and the plugging portion at the faulty position need to be detached, without detaching the connection portions and plugging portions at other positions. The operation scope is relatively small, which can reduce the maintenance difficulty, reduce the risk of causing interference to other normally operating plugging portions, and help to save maintenance costs and material costs. When the heat exchange capacity of the heat exchange assembly needs to be adjusted, such as adjusting the number of heat exchange channels participating in heat exchange, the above solution can facilitate starting or closing a single heat exchange channel or some heat exchange channels, and flexible adjustment can be made by detaching or mounting the connection portion according to actual heat exchange requirements. There are few restrictions during adjustment, which is beneficial to the flexible adjustment of the heat exchange channels in the heat exchange body.

In some embodiments of the present application, the connection portion includes a first part and a second part, the first part and the second part are detachably connected, the first part is connected to one of two adjacent plugging portions, and the second part is connected to the other of the two adjacent plugging portions.

In the above technical solution, by configuring the connection portion into a two-part structure and respectively arranging the two parts on adjacent two plugging portions, the two adjacent plugging portions can be detachably connected through the first part and the second part. The plugging portion does not need to be provided with a structure for detachable engagement, thereby reducing structural damage to the plugging portion and ensuring structural reliability of the plugging portions themselves. Thus, the plugging effect of the plugging portion on the heat exchange channel can be enhanced, and the structure of the plugging portion can be simplified, thereby reducing the manufacturing cost.

In some embodiments of the present application, one of the two adjacent plugging portions is integrally formed with the first part, and the other is integrally formed with the second part. In this technical solution, by integrally forming the first part with the corresponding plugging portion, the number of components can be reduced, assembly steps can be reduced, and the assembly efficiency of the heat exchange assembly can be improved. Moreover, the first part and the corresponding plugging portion can be integrally formed as a single piece, thereby improving the overall structural strength and improving the reliability of the plugging member. Integrally forming the second part with the corresponding plugging portion can also reduce the number of components, reduce assembly steps, and improve the assembly efficiency of the heat exchange assembly. Moreover, the second part and the corresponding plugging portion can be integrally formed as a single piece, thereby improving the overall structural strength and improving the reliability of the plugging member.

In some embodiments of the present application, the first part is provided with a first insertion portion extending out of the plugging portion, and the second part is provided with a first insertion slot. The first insertion slot and the first insertion portion are in insertion engagement with each other, and the first insertion portion and the first insertion slot extend along the arrangement direction of the at least two plugging portions. In the above technical solution, the first part may be in insertion engagement with the first insertion slot of the second part through the first insertion portion, thereby detachably connecting the two adjacent plugging portions. This detachable mode is simple to operate and easy to implement, thereby improving detachment and assembly efficiency and reducing costs.

In some embodiments of the present application, the connection portion is connected to one of two adjacent plugging portions, and includes an extension portion and a second insertion portion. The extension portion is connected to the plugging portion and extends toward the other of the two adjacent plugging portions. The second insertion portion is provided on the extension portion. The other of the two adjacent plugging portions is provided with a second insertion slot, and the second insertion slot and the second insertion portion are in insertion engagement with each other. In this technical solution, the two adjacent plugging portions may be connected together through the insertion engagement between the second insertion portion and the second insertion slot. This detachable mode is simple to operate, and since the second insertion slot is provided on the plugging portion, the combination of the connection portion and the plugging portion is relatively firm, and the connection reliability is improved.

In some embodiments of the present application, the second insertion portion is provided at an end of the extension portion facing away from the manifold. In this technical solution, the second insertion portion is provided at the end of the extension portion, whereby the overall structure of the connection portion can be made more compact, the size of the connection portion can be reduced, and the weight can be reduced, helping to improve the energy density of the battery apparatus.

In some embodiments of the present application, the connection portion and the corresponding plugging portion are integrally formed. In this technical solution, the connection portion and the corresponding plugging portion are integrally formed, which can also reduce the number of components, reduce assembly steps, and improve the assembly efficiency of the heat exchange assembly. Moreover, the connection portion and the corresponding plugging portion can be integrally formed as a single piece, improving the overall structural strength and improving the reliability of the plugging member.

In some embodiments of the present application, the connection portion and the at least two plugging members are integrally formed.

In the above technical solution, the above structure can reduce the number of components, reduce assembly steps, and improve the assembly efficiency of the heat exchange assembly. Moreover, the connection portion and the at least two plugging portions can be integrally formed as a single piece, improving the overall structural strength and improving the reliability of the plugging member.

In some embodiments of the present application, the adapter member is integrally injection-molded on the heat exchange body.

In the above technical solution, the adapter member is injection-molded on the heat exchange body. The adapter member can be molded at a relatively high speed and is suitable for large-scale automated production, thereby improving production efficiency. This manner can also enable the adapter member to have high dimensional accuracy and high surface quality, thereby improving the forming quality of the adapter member and the connection reliability among the heat exchange body, the adapter member, and the manifold, and further improving the reliability of the battery apparatus.

In some embodiments of the present application, the heat exchange body is a metal material member or a non-metal material member; and/or, the manifold is a metal material member or a non-metal material member. In this technical solution, as a metal material member, the heat exchange body can have better thermal conductivity, thereby helping to improve heat exchange efficiency. Alternatively, the heat exchange body may be a non-metal material member, thereby helping to reduce costs while meeting thermal conductivity performance. As a metal material member, the manifold can have high rigidity and strength, thereby reducing the risk of damage. As a non-metal material member, the manifold can reduce costs under the premise of meeting rigidity and strength requirements. By configuring the heat exchange body and the manifold to be made of the above materials, more choices can be provided, thereby achieving higher flexibility.

According to a second aspect, an embodiment of the present application provides an electrical apparatus, including the battery apparatus according to any of the foregoing embodiments, where the battery apparatus is configured to store or provide electrical energy.

In the above technical solution, since the battery apparatus has high reliability, adopting the battery apparatus to store or provide electrical energy can improve the reliability of electricity use, thereby improving the service reliability of the electrical apparatus.

### BRIEF DESCRIPTION OF DRAWINGS

To describe technical solutions in embodiments of the present application more clearly, the following briefly describes the accompanying drawings required for describing the embodiments. It should be understood that the following accompanying drawings only show some embodiments of the present application, and therefore should not be regarded as limiting the scope. For those of ordinary skill in the art, other relevant drawings may also be obtained based on these accompanying drawings without creative efforts.
FIG. 1 is a schematic structural diagram of a vehicle according to some embodiments of the present application;
FIG. 2 is an exploded structural diagram of a battery apparatus according to some embodiments of the present application;
FIG. 3 is a partial schematic structural diagram of a battery apparatus according to some embodiments of the present application;
FIG. 4 is a schematic perspective structural diagram of a heat exchange assembly according to some embodiments of the present application;
FIG. 5 is a partial schematic structural diagram of a heat exchange assembly according to some embodiments of the present application;
FIG. 6 is a partial schematic structural diagram of a heat exchange body according to some embodiments of the present application;
FIG. 7 is a partial schematic diagram of an internal structure of a heat exchange assembly according to some embodiments of the present application;
FIG. 8 is a schematic perspective structural diagram of a plugging member according to some embodiments of the present application;
FIG. 9 is an exploded view of a plugging member according to some embodiments of the present application;
FIG. 10 is a schematic perspective structural diagram of a plugging member according to another embodiment of the present application;
FIG. 11 is an exploded view of a plugging member according to another embodiment of the present application;
FIG. 12 is a schematic perspective structural diagram of a plugging member according to yet another embodiment of the present application;
FIG. 13 is an exploded view of a plugging member provided by yet another embodiment of the present application;
FIG. 14 is an enlarged schematic view of region I in FIG. 7;
FIG. 15 is a schematic perspective structural diagram of an adapter member according to some embodiments of the present application;
FIG. 16 is a schematic perspective structural diagram of a manifold according to some embodiments of the present application; and
FIG. 17 is a side view of a heat exchange body according to some embodiments of the present application.

### Reference numerals:

1000. electrical apparatus;
100. battery apparatus;
10. enclosure; 11. first enclosure body; 12. second enclosure body;
20. battery cell assembly; 21. battery cell;
30. heat exchange assembly;
31. heat exchange body; 301. heat exchange channel; 302. channel wall; 311. shell; 311a. arcuate wall; 312. partition plate;
32. manifold structure;
321. plugging member; 3211. connection portion; 3211a. relief groove; 3212. plugging portion; 3212a. outer side surface; 3212b. second insertion slot; 3212c. circumferential surface; 3205. first part; 32051. first insertion portion; 3207. extension portion; 3208. second insertion portion; 3206. second part; 3206a. first insertion slot;
322. manifold; 3221. manifold cavity; 322a. communication port; 322b. recess;
323. adapter member; 3231. weldable portion;
3201. snap protrusion portion; 3202. snap groove portion; 3203. guide groove; 3204. guide post;
200. controller; 300. motor; X. first direction; Y. second direction; and Z. third direction.

### DESCRIPTION OF EMBODIMENTS

To make the objectives, technical solutions, and advantages of some embodiments of the present application clearer, the following clearly describes the technical solutions in some embodiments of the present application with reference to the accompanying drawings in some embodiments of the present application. Apparently, these embodiments described are some rather than all embodiments of the present application. All other embodiments obtained by persons of ordinary skills in the art based on the embodiments of the present application without creative efforts shall fall within the protection scope of the present application.

Unless otherwise defined, all technical and scientific terms used in the present application shall have the same meanings as commonly understood by those skilled in the art to which the present application relates. The terms used in the specification of the present application are intended to merely describe the specific embodiments rather than to limit the present application. The terms "include", "comprise", "have", and any variations thereof in the specification and claims of the present application as well as the foregoing description of accompanying drawings are intended to cover non-exclusive inclusions. The terms "first", "second", and the like in the specification and claims of the present application or the above accompanying drawings are used to distinguish different objects, not to describe a specific order or primary-secondary relationship.

Reference to "embodiment" in the present application means that a specific feature, structure, or characteristic described with reference to the embodiment may be included in at least one embodiment of the present application. The appearance of this phrase in various places in the specification does not necessarily refer to the same embodiment or an independent or alternative embodiment that is exclusive of other embodiments.

In the description of the present application, it should be noted that, unless otherwise clearly specified and limited, terms "mount", "connect", "join", "attach" should be understood in a broad sense. For example, the connection may be a fixed connection, or a detachable connection, or an integral connection; may be a direct connection, or an indirect connection through an intermediary, or may be an internal communication between two elements. For those of ordinary skill in the art, the specific meanings of the above terms in the present application may be understood according to specific circumstances.

The term "and/or" in the present application is merely a description of the association relationship of associated objects, indicating that three relationships may exist. For example, A and/or B may indicate three cases: A exists alone, A and B exist simultaneously, and B exists alone. In addition, the character "/" in the present application generally indicates that the associated objects before and after are in an "or" relationship.

In the embodiments of the present application, the same reference numerals represent the same components, and for the sake of brevity, detailed descriptions of the same components are omitted in different embodiments. It should be understood that the thicknesses, lengths, widths and other dimensions of various components in the embodiments of the present application shown in the accompanying drawings, as well as the overall thickness, length, width and other dimensions of the integrated apparatus, are for illustrative purpose only and should not constitute any limitation to the present application.

"A plurality of" appearing in the present application refers to two or more (including two).

In the present application, the battery cell may include a lithium-ion battery, a sodium-ion battery, a sodium-lithium-ion battery, a lithium-metal battery, a sodium-metal battery, a lithium-sulfur battery, a magnesium-ion battery, a nickel-metal hydride battery, a nickel-cadmium battery, a lead-acid battery, and the like, which is not limited in the embodiments of the present application. The battery cell may be cylindrical, flat, cuboid, or of other shapes, which is not limited in the embodiments of the present application either. Battery cells are typically divided into three types by packaging method: cylindrical battery cell, prismatic battery cell, and pouch battery cell, which is not limited in the embodiments of the present application either.

The battery apparatus mentioned in the embodiments of the present application may include one or more battery cell assemblies for providing voltage and capacity. The battery cell assembly may include a plurality of battery cells, and the plurality of battery cells are connected in series, in parallel, or in a series-parallel configuration through a busbar component. In some embodiments, the battery cell assembly is generally formed by arranging a plurality of battery cells.

In an example, the battery cell assembly may be a battery module. The battery module is formed by arranging and fixing a plurality of battery cells into an independent module. In an example, the battery module may be formed by bundling a plurality of battery cells with cable ties.

In some embodiments, the battery apparatus may be a battery pack. The battery pack may include an enclosure and one or more battery cell assemblies. The battery cell assemblies are accommodated in the enclosure. In an example, the battery cell assembly may be a battery module. The battery cell assembly may be accommodated in the enclosure by fixing the battery module in the enclosure. In an example, the battery cell assembly may alternatively be accommodated in the enclosure by directly fixing a plurality of battery cells in the enclosure. The enclosure can prevent liquid or other foreign matters from affecting the charging or discharging of the battery cells.

The battery cell includes a casing, an electrode assembly, and an electrolyte, and the casing is configured to accommodate the electrode assembly and the electrolyte. The electrode assembly is composed of a positive electrode sheet, a negative electrode sheet, and a separator. The battery cell mainly relies on metal ions moving between the positive electrode sheet and the negative electrode sheet to work. The positive electrode sheet includes a positive electrode current collector and a positive electrode active material layer. The positive electrode active material layer is coated on the surface of the positive electrode current collector, the positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium-ion battery as an example, the material of the positive electrode current collector may be aluminum, and the positive electrode active material may be lithium cobalt oxide, lithium iron phosphate, ternary lithium, lithium manganese oxide, or the like. The negative electrode sheet includes a negative electrode current collector and a negative electrode active material layer. The negative electrode active material layer is coated on the surface of the negative electrode current collector, the negative electrode current collector not coated with the negative electrode active material layer protrudes from the negative electrode current collector coated with the negative electrode active material layer, and the negative electrode current collector not coated with the negative electrode active material layer serves as a negative electrode tab. The material of the negative electrode current collector may be copper, and the negative electrode active material may be carbon, silicon, or the like. To ensure the passing of a large current without fusing, there are a plurality of positive electrode tabs that are stacked together, and there are a plurality of negative electrode tabs that are stacked together.

The material of the separator may be PP (polypropylene), PE (polyethylene), or the like. In addition, the electrode assembly may be a winding structure or a stacking structure, but the embodiments of the present application are not limited thereto.

In recent years, new energy vehicles have made a leap forward in development. In the field of electric vehicles, power batteries, as the power source of electric vehicles, play an irreplaceable and important role. The battery apparatus is composed of an enclosure and a plurality of battery cells accommodated in the enclosure. The battery cells in the battery apparatus generate a large amount of heat during continuous charging and discharging use. A heat exchange assembly is usually required to be disposed inside the battery apparatus for heat exchange, so as to regulate the temperature inside the battery apparatus. However, the reliability of the heat exchange assembly affects the reliability of the battery apparatus to a large extent. Therefore, how to further improve the reliability of the battery apparatus has become one of the urgent problems to be resolved currently.

In a typical battery apparatus, a cold plate is usually disposed inside the enclosure to exchange heat with the battery cell assembly, and the cold plate is connected to pipelines for entry and exit of a heat exchange medium through a manifold. The cold plate and the manifold are two independent components, both of which are made of metal and are connected by a brazing process. However, the size and surface flatness of the cold plate are relatively difficult to control, and the cold plate cannot be in good contact with the manifold. During welding, the welding quality may be affected, causing a leakage risk between the cold plate and the manifold, thereby affecting the heat exchange reliability of the cold plate. In addition, after the leaked heat exchange medium enters the enclosure, electrical safety hazards such as short circuits may easily occur, thereby affecting the overall reliability of the battery apparatus.

Based on the above considerations, in order to resolve the problem that the reliability of the battery apparatus is affected due to the reliability problem of the heat exchange assembly during the mounting process, the applicant designed a battery apparatus, including: an enclosure, a battery cell assembly, and a heat exchange assembly. The battery cell assembly is accommodated in the enclosure; the heat exchange assembly is accommodated in the enclosure and exchanges heat with the battery cell assembly, the heat exchange assembly including a heat exchange body and manifold structures, and the heat exchange body includes a plurality of heat exchange channels extending along a first direction. The manifold structures are disposed at two ends of the heat exchange body in the first direction, where the manifold structure includes a plugging member, an adapter member, and a manifold. The plugging member includes a connection portion and at least two plugging portions, the at least two plugging portions are connected through the connection portion, and the at least two plugging portions are configured to be fitted into at least two heat exchange channels. The adapter member is formed on the heat exchange body, a manifold cavity is formed inside the manifold, and the manifold is sealingly engaged with and connected to the heat exchange body through the adapter member, such that the manifold cavity is in communication with the heat exchange channel. The manifold is provided with a communication port communicating with the manifold cavity, and the communication port is configured for entry and exit of a heat exchange medium, such that the heat exchange medium is allowed to flow between the manifold cavity and the heat exchange channels.

In the battery apparatus of the above structure, by configuring the heat exchange assembly to include a heat exchange body and manifold structures, and configuring the manifold structure to include the plugging member, the manifold, and the adapter member, when the heat exchange body is connected to the manifold structure, the adapter member is formed on the heat exchange body, and then the manifold is connected, whereby the manifold is not directly connected to the heat exchange body. During formation of the adapter member, the adapter member can relatively easily conform to the size and shape of the heat exchange body, and can be matched with the size and shape of the manifold in advance, thereby reducing the mounting difficulty among the heat exchange body, the manifold, and the adapter member, improving connection reliability, reducing the risk of leakage, and improving the reliability of the battery apparatus. By configuring the plugging member to include the connection portion and at least two plugging portions, the at least two plugging portions being connected through the connection portion, the connection portion can play a limiting role on the plugging portions, thereby reducing the risk of displacement or deformation of the plugging portions during formation of the adapter member. This helps to improve the plugging and sealing effect of the plugging portions against the corresponding heat exchange channel, so as to meet the heat exchange design requirements of the heat exchange assembly. In addition, this helps to improve the forming quality of the adapter member, and improve the connection strength and reliability between the adapter member and the heat exchange body, thereby improving the reliability of the heat exchange assembly and improving the reliability of the battery apparatus.

The battery apparatus disclosed in the embodiments of the present application can be used in, but is not limited to, electrical apparatuses such as vehicles, ships, or aircraft. A power supply system constituting the electrical apparatus can be formed using the battery apparatus disclosed in the present application and other components.

An embodiment of the present application provides an electrical apparatus using a battery apparatus as a power source. The electrical apparatus may be, but is not limited to, a mobile phone, a tablet, a laptop, an electric toy, an electric tool, a battery car, an electric vehicle, a ship, and a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

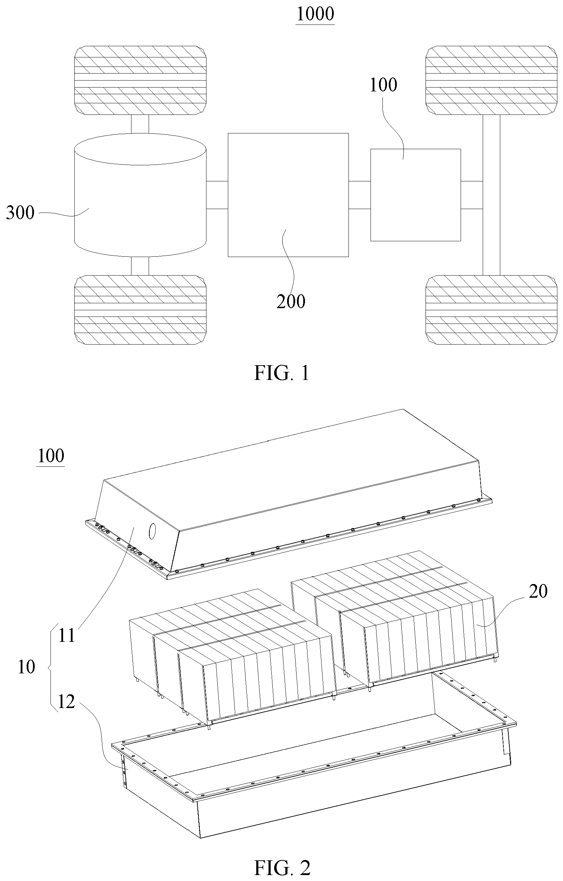

For ease of description, the following embodiments take an electrical apparatus 1000 of an embodiment of the present application being a vehicle as an example for description. Referring to FIG. 1, FIG. 1 is a schematic structural diagram of the electrical apparatus 1000 being a vehicle according to some embodiments of the present application. The vehicle may be a fuel vehicle, a gas vehicle, or a new energy vehicle, and the new energy vehicle may be a pure electric vehicle, a hybrid vehicle, an extended-range vehicle, or the like. A battery apparatus 100 is disposed inside the vehicle, and the battery apparatus 100 may be disposed at the bottom, front, or rear of the vehicle. The battery apparatus 100 may be configured to supply power to the vehicle. For example, the battery apparatus 100 may serve as an operating power source of the vehicle. The vehicle may further include a controller 200 and a motor 300, where the controller 200 is configured to control the battery apparatus 100 to supply power to the motor 300, for example, to satisfy power needs of start, navigation, and driving of the vehicle.

In some embodiments of the present application, the battery apparatus 100 may serve not only as an operating power source of the vehicle, but also as a driving power source of the vehicle, replacing or partially replacing fuel or natural gas to provide driving power for the vehicle.

Referring to FIG. 2, FIG. 2 is an exploded structural diagram of the battery apparatus 100 according to some embodiments of the present application. The battery apparatus 100 includes an enclosure 10 and a plurality of battery cells 21, and the battery cells 21 are configured to be accommodated in the enclosure 10. The enclosure 10 is configured to provide an assembly space for the battery cells 21, and the enclosure 10 can be a variety of structures. In some embodiments, the enclosure 10 may include a first enclosure body 11 and a second enclosure body 12, where the first enclosure body 11 and the second enclosure body 12 fit together. The first enclosure body 11 and the second enclosure body 12 jointly define an assembly space for accommodating the battery cells 21. The second enclosure body 12 may be a hollow structure with one end open, the first enclosure body 11 may be a plate-like structure, and the first enclosure body 11 covers the open side of the second enclosure body 12, such that the first enclosure body 11 and the second enclosure body 12 jointly define the assembly space. The first enclosure body 11 and the second enclosure body 12 may alternatively both be hollow structures with one side open, and the open side of the first enclosure body 11 covers the open side of the second enclosure body 12. However, the enclosure 10 formed by the first enclosure body 11 and the second enclosure body 12 may be in various shapes, such as a cylinder or a cuboid.

In the battery apparatus 100, the plurality of battery cells 21 may be connected in series, in parallel or in a hybrid manner. The hybrid manner means that the plurality of battery cells 21 are connected in both series and parallel. The plurality of battery cells 21 may be directly connected in series, in parallel, or in a hybrid manner, and then an entirety constituted by the plurality of battery cells 21 is accommodated in the enclosure 10. Alternatively, the battery apparatus 100 may be formed by connecting a plurality of battery cells 21 in series, in parallel, or in a hybrid manner to form a battery module and then a plurality of battery modules being connected in series, parallel, or series-parallel to form an entirety which is accommodated in the enclosure 10. The battery apparatus 100 may further include other structures. For example, the battery apparatus 100 may further include a busbar component configured to implement electrical connection among the plurality of battery cells 21.

Referring to FIG. 2, FIG. 2 is a partial schematic structural diagram of a battery apparatus 100 according to some embodiments of the present application. The battery apparatus 100 includes a plurality of rows of battery cells 21, the plurality of rows of battery cells 21 are arranged along the length direction of the enclosure 10, and each row of battery cells 21 includes a plurality of battery cells 21 arranged along the width direction of the enclosure 10; alternatively, the plurality of rows of battery cells 21 are arranged along the width direction of the enclosure 10, and each row of battery cells 21 includes a plurality of battery cells 21 arranged along the length direction of the enclosure 10.

Each battery cell 21 may be a secondary battery or a primary battery, where the secondary battery refers to a battery cell 21 that can continue to be used by activating the active material by means of charging after the battery cell is discharged. The battery cell may also be a lithium-ion battery, a sodium-ion battery, a sodium-lithium-ion battery, a lithium-metal battery, a sodium-metal battery, a lithium-sulfur battery, a magnesium-ion battery, a nickel-metal hydride battery, a nickel-cadmium battery, a lead-acid battery, or the like, which is not limited in the embodiments of the present application. The battery cell 21 may be cylindrical, flat, cuboid, or of other shapes. By way of example, in FIG. 2, the shape of the battery cell 21 is cuboid.

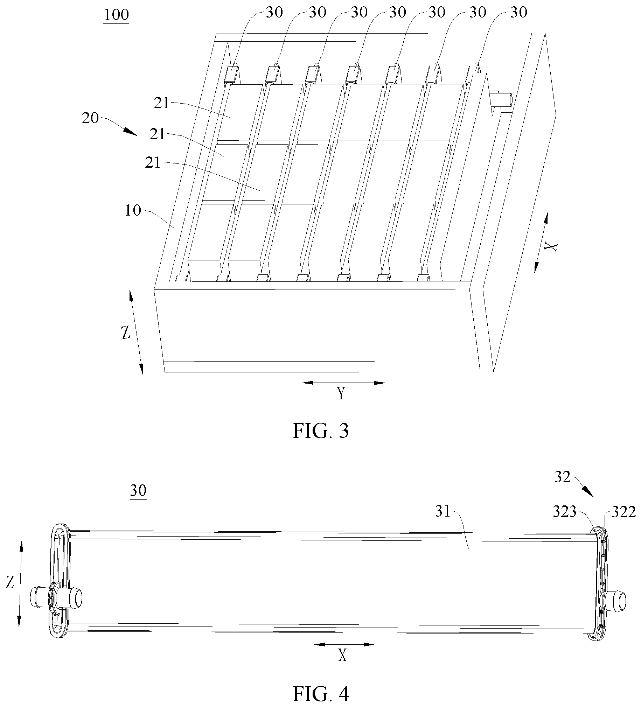

According to some embodiments of the present application, referring to FIG. 3 to FIG. 7, an embodiment of the present application provides a battery apparatus 100, including: an enclosure 10, a battery cell assembly 20, and a heat exchange assembly 30. The battery cell assembly 20 is accommodated in the enclosure 10. The heat exchange assembly 30 is accommodated in the enclosure 10 and exchanges heat with the battery cell assembly 20. The heat exchange assembly 30 includes a heat exchange body 31 and manifold structures 32, and the heat exchange body 31 includes a plurality of heat exchange channels 301 extending along a first direction X. The manifold structures 32 are disposed at two ends of the heat exchange body 31 in the first direction X. The manifold structure 32 includes a plugging member 321, an adapter member 323, and a manifold 322. The plugging member 321 includes a connection portion 3211 and at least two plugging portions 3212. The at least two plugging portions 3212 are connected through the connection portion 3211, and the at least two plugging portions 3212 are configured to be fitted into at least two heat exchange channels 301. The adapter member 323 is formed on the heat exchange body 31. A manifold cavity 3221 is formed inside the manifold 322. The manifold 322 is sealingly engaged with and connected to the heat exchange body 31 through the adapter member 323 to communicate the manifold cavity 3221 with the heat exchange channels 301. The manifold 322 is provided with a communication port 322a communicating with the manifold cavity 3221, and the communication port 322a is configured for entry and exit of a heat exchange medium, such that the heat exchange medium is allowed to flow between the manifold cavity 3221 and the heat exchange channels 301.

The enclosure 10 may refer to an external structure of the battery apparatus 100, which is a component providing physical protection for components such as the battery cell assembly 20 and the heat exchange assembly 30 inside the battery apparatus 100. The material of the enclosure 10 may include, but is not limited to, a metal material or a composite material, where the metal material may include, but is not limited to, an aluminum alloy or steel, and the composite material may include, but is not limited to, a carbon fiber reinforced composite material, or a glass fiber reinforced composite material. The shape of the enclosure 10 may be, but is not limited to, a cuboid, a cube, or a cylinder.

The battery cell assembly 20 may refer to an assembly including one or more battery cells 21. When there are a plurality of battery cells 21, the plurality of battery cells 21 may be connected in series, in parallel, or in a combination of series and parallel, without being limited thereto.

The heat exchange assembly 30 may refer to a structure or component configured to regulate the temperature of the battery cell assembly 20 and ensure normal operation of the battery cell assembly 20. One or more heat exchange assemblies 30 may be provided. The heat exchange assembly 30 may be disposed on a surface of one or two battery cells 21 on the outermost side of the battery cell assembly 20, or may be disposed between any adjacent two battery cells 21 of one or more groups of battery cells 21. By way of example, referring to FIG. 3, the battery cell assembly 20 may include a plurality of rows of battery cells 21 arranged along the second direction Y, each row may include a plurality of battery cells 21 arranged along the first direction X, and heat exchange assemblies 30 are disposed between any adjacent two rows of battery cells 21 and on the outer sides of the two rows of battery cells 21 at two ends in the second direction Y. The first direction X, the second direction Y, and the third direction Z mentioned below may each refer to one of the length direction, the width direction, and the height direction of the heat exchange body 31, for example, the first direction X may refer to the length direction of the heat exchange body 31.

The heat exchange body 31 may refer to a tubular component or a cavity structural member through which a heat exchange medium is capable of flowing, and the heat exchange channel 301 may refer to a channel formed inside the heat exchange body 31 for allowing the heat exchange medium to flow therethrough, and may extend through the heat exchange body 31 along the first direction X. The heat exchange body 31 may be flat. For example, the heat exchange body 31 may be a plate-like component, or a structural member formed by connecting a plurality of heat exchange tubes side by side. The material of the heat exchange body 31 may include, but is not limited to, metal materials, composite materials, or ceramic materials. The metal materials may include, but are not limited to, aluminum alloys or copper alloys, the composite materials may include, but are not limited to, carbon fiber reinforced composite materials or graphite-metal composite materials, and the ceramic materials may include, but are not limited to, aluminum nitride ceramics or beryllium oxide ceramics. The heat exchange medium mentioned in the present application may include, but is not limited to, water, an ethylene glycol aqueous solution, mineral oil, or silicone oil.

The manifold structures 32 are disposed at two ends of the heat exchange body 31 in the first direction X, which may mean that one of the manifold structures 32 at the two ends in the first direction X may be configured to introduce the heat exchange medium and deliver the heat exchange medium into the heat exchange channel 301 of the heat exchange body 31, and the other manifold structure 32 may be configured to output the heat exchange medium after heat exchange from the heat exchange channel 301 to an external circulation pipeline.

The plugging member 321 may refer to a component capable of plugging the heat exchange channels 301. The plugging member 321 is composed of at least two parts: a connection portion 3211 and a plugging portion 3212.

For convenience of understanding, the plugging portion 3212 may refer to a plug or a stopper, which is partially or completely embedded in the heat exchange channel 301 to plug the heat exchange channel 301. The number of plugging portions 3212 may be two, three, four, or more. A desired number of plugging portions 3212 may be selected as needed to plug a corresponding number of heat exchange channels 301, thereby adjusting the heat exchange capacity of the heat exchange assembly 30 to meet different usage requirements. For example, if the number of plugged heat exchange channels 301 in the heat exchange body 31 is larger, the amount of heat exchange medium flowing through the heat exchange body 31 is smaller, and the overall heat exchange capacity of the heat exchange assembly 30 is lower. If the number of plugged heat exchange channels 301 in the heat exchange body 31 is smaller, the amount of heat exchange medium flowing through the heat exchange body 31 is larger, and the overall heat exchange capacity of the heat exchange assembly 30 is higher. The material of the plugging portion 3212 may include, but is not limited to, wood, rubber, or plastic.

The connection portion 3211 may refer to a connection structure or component connecting at least two plugging portions 3212. By connecting the connection portion 3211 and the at least two plugging portions 3212, the connection portion 3211 and the at least two plugging portions 3212 may be integrally formed as a single piece. The at least two plugging portions 3212 may be simultaneously mounted into the corresponding heat exchange channels 301, which is beneficial to completing the assembly of at least the plugging portions 3212 in one operation, reducing the number of assembly operations, and improving the assembly efficiency. After the at least two plugging portions 3212 are assembled into the heat exchange channels 301, the connection portion 3211 can further play a limiting role on the outer side of the heat exchange channels 301 to reduce the risk of displacement and deformation of the plugging portions 3212 in the heat exchange channels 301, thereby improving the reliability of mounting the plugging portions 3212 in the heat exchange channels 301, improving the plugging reliability of the plugging portions 3212 on the heat exchange channels 301, and also facilitating the smooth and stable forming of the adapter member 323 on the heat exchange body 31.

The manifold 322 may refer to a main structure of the manifold structure 32, and is a component configured to receive the heat exchange medium and collect the heat exchange medium together. By way of example, the manifold 322 may be a manifold body, and the manifold cavity 3221 refers to a cavity structure formed in the manifold 322. Optionally, the manifold cavity 3221 may be a cavity open on a side toward the heat exchange body 31, and the communication port 322a may refer to an inlet and outlet through which the heat exchange medium enters and exits the manifold cavity 3221. The material of the manifold 322 may include, but is not limited to, metal materials, plastic materials, or composite materials. The metal materials may include, but are not limited to, aluminum alloys or copper alloys, the plastic materials may include, but are not limited to, polyethylene or polypropylene, and the composite materials may include, but are not limited to, carbon fiber reinforced composite materials or graphite-metal composite materials.

The adapter member 323 may refer to a component configured to connect the manifold 322 and the heat exchange body 31. The adapter member 323 may be an annular structure extending around the first direction X, one end of the adapter member 323 is wrapped around the heat exchange body 31, and the other end is wrapped around the manifold 322. The material of the adapter member 323 may include, but is not limited to, metal materials or plastic materials. The metal materials may include, but are not limited to, aluminum alloys or copper alloys, and the plastic materials may include, but are not limited to, polyethylene or polypropylene.

"The adapter member 323 is formed on the heat exchange body 31" may be understood as follows: the adapter member 323 may be manufactured by being formed on a surface of the heat exchange body 31, such that the adapter member 323 and the heat exchange body 31 are tightly combined to form an entirety. The molding manner of the adapter member 323 on the heat exchange body 31 may include, but is not limited to, injection molding, 3D printing, or casting, which is not specifically limited herein.

Since the heat exchange body 31 and the manifold 322 are usually pre-manufactured components, their sizes or shapes have already been fixed. If the heat exchange body 31 and the manifold 322 are directly connected, it may be difficult to match the dimensions, shapes, and surface flatness of the two components, and poor contact therebetween is likely to occur, thereby affecting the connection quality. By forming the adapter member 323 on the heat exchange body 31, the adapter member 323 may be manufactured according to the existing sizes and shape of the heat exchange body 31, facilitating manufacturing of the adapter member 323. In addition, through a mold for forming the adapter member 323, the adapter member 323 can better conform to the existing size, shape, and surface flatness of the manifold 322, thereby reducing the mounting difficulty between the heat exchange body 31 and the manifold 322. The heat exchange body 31 is connected to the manifold 322 through the adapter member 323, which easily ensures high connection quality, thereby improving the connection reliability among the heat exchange body 31, the adapter member 323, and the manifold 322.

The connection manner between the adapter member 323 and the manifold 322 may include, but is not limited to, welding, bolt connection, or riveting, which is not specifically limited herein.

During formation of the adapter member 323 on the heat exchange body 31, the material for forming the adapter member 323 (such as injection molding liquid or casting liquid) may act on the plugging portion 3212. Since the connection portion 3211 is located on the outer side of the heat exchange body 31, the connection portion 3211 can limit the at least two plugging portions 3212, such that the plugging portions 3212 can stably stay inside the heat exchange channels 301 and are not easy to displace or deform, thereby facilitating the plugging portions 3212 to plug the heat exchange channels 301 and reducing the risk of displacement of the plugging portions 3212 during formation of the adapter member 323. If the plugging portions 3212 displace, the material for forming the adapter member 323 during formation enters the space formed after the displacement of the plugging portions 3212, resulting in insufficient material to form the adapter member 323, and affecting the forming quality of the adapter member 323. Therefore, the above solution facilitates smooth formation of the adapter member 323 on the heat exchange body 31, improves the formation quality of the adapter member 323, and improves the connection strength and reliability between the adapter member 323 and the heat exchange body 31.

In the battery apparatus 100 of the above structure, by configuring the heat exchange assembly 30 to include the heat exchange body 31 and the manifold structure 32, and configuring the manifold structure 32 to include the plugging member 321, the manifold 322, and the adapter member 323, when the heat exchange body 31 is connected to the manifold structure 32, the adapter member 323 is formed on the heat exchange body 31, and then the manifold 322 is connected, whereby the manifold 322 is not directly connected to the heat exchange body 31. During formation of the adapter member 323, the adapter member 323 can relatively easily adapt to the size and shape of the heat exchange body 31, and can be matched with the size and shape of the manifold 322 in advance, thereby reducing the mounting difficulty among the heat exchange body 31, the manifold 322, and the adapter member 323, improving the connection reliability, reducing the risk of leakage, and improving the reliability of the battery apparatus 100. By configuring the plugging member 321 to include the connection portion 3211 and the at least two plugging portions 3212, the at least two plugging portions 3212 being connected through the connection portion 3211, the connection portion 3211 can play a limiting role on the plugging portions 3212, thereby reducing the risk of displacement or deformation of the plugging portions 3212 during formation of the adapter member 323. This helps to improve the plugging and sealing effect of the plugging portions 3212 against the corresponding heat exchange channel 301, so as to meet the heat exchange design requirements of the heat exchange assembly 30. In addition, this helps to improve the forming quality of the adapter member 323, and improve the connection strength and reliability between the adapter member 323 and the heat exchange body 31, thereby improving the reliability of the heat exchange assembly 30, and also improve the reliability of the battery apparatus 100.

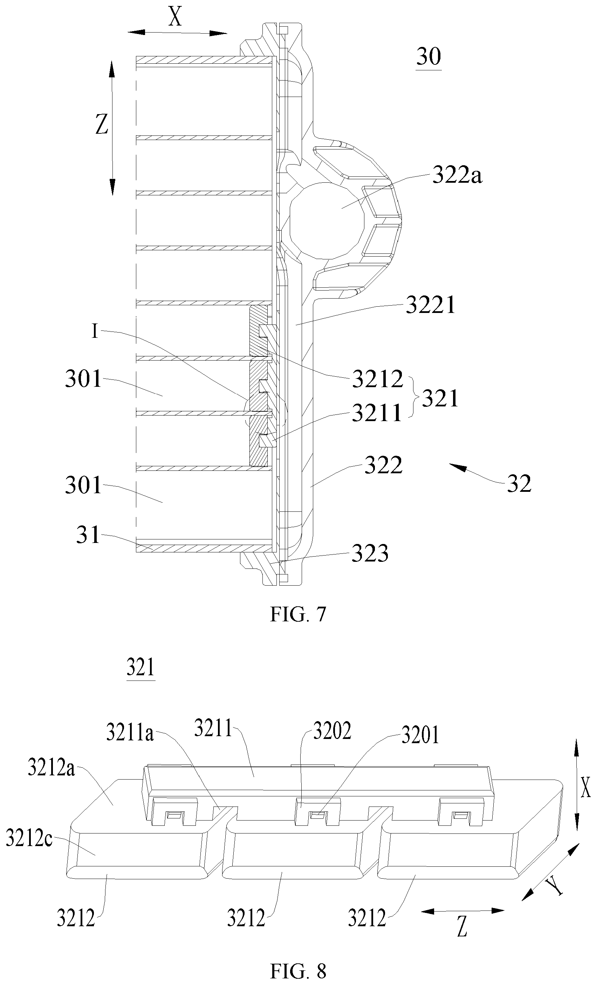

In some embodiments of the present application, referring to FIG. 8 to FIG. 13, the plugging portion 3212 has an outer side surface 3212a close to the manifold 322, and on a reference plane parallel to the outer side surface 3212a, an area of an orthographic projection of the connection portion 3211 on the reference plane is smaller than an area of the outer side surface 3212a.

The "reference plane" may refer to any plane made parallel to the outer side surface 3212a.

"An area of the orthographic projection of the connection portion 3211 on the reference plane is smaller than an area of the outer side surface 3212a" may be understood as that in the second direction Y, the dimension of the connection portion 3211 is smaller than the dimension of the outer side surface 3212a; or, in the third direction Z, the dimension of the part of the connection portion 3211 corresponding to the outer side surface 3212a is smaller than the dimension of the outer side surface 3212a; or, in the second direction Y, the dimension of the connection portion 3211 is smaller than the dimension of the outer side surface 3212a, and in the third direction Z, the dimension of the part of the connection portion 3211 corresponding to the outer side surface 3212a is smaller than the dimension of the outer side surface 3212a. The second direction Y and the third direction Z may be referred to FIG. 8 to FIG. 13.

In the above technical solution, with the above structure, dimensions of a part of the connection portion 3211 corresponding to the plugging portion 3212 are smaller than dimensions of the plugging portion 3212. During formation of the adapter member 323 on the heat exchange body 31, a larger bonding surface is provided between a material forming the adapter member 323 and the outer side surface 3212a, thereby improving the bonding strength and connection reliability among the plugging portion 3212, the adapter member 323, and the heat exchange body 31, enhancing the plugging and sealing effect of the plugging portion 3212 on the heat exchange channel 301, improving the reliability of the heat exchange assembly 30, and thus improving the reliability of the battery apparatus 100. The above structure can also reduce the amount of material used and reduce the weight of the plugging member 321 on the basis that the at least two plugging portions 3212 are integrally formed as a single piece through the connection portion 3211, which helps to improve the energy density of the battery apparatus 100.

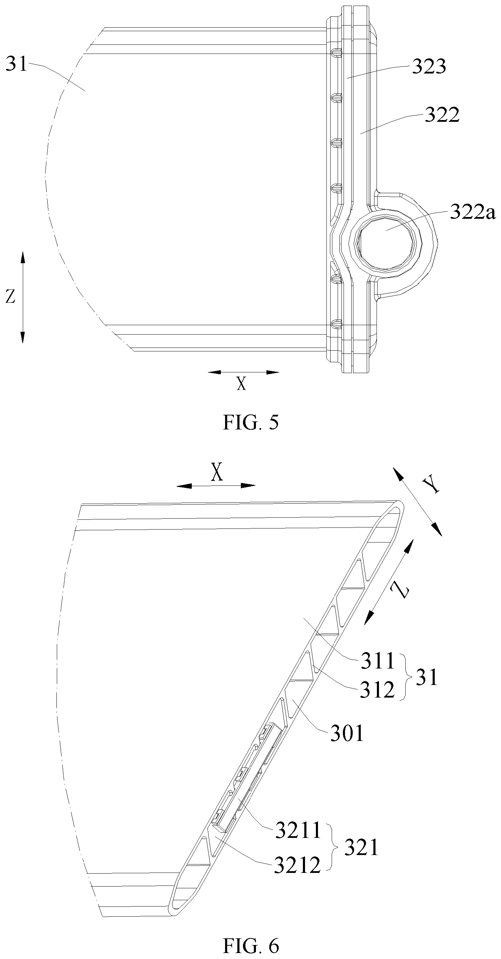

In some embodiments of the present application, referring to FIG. 6 and FIG. 8, a dimension of the heat exchange body 31 in the first direction X and a dimension of the heat exchange body 31 in the third direction Z are both greater than a dimension of the heat exchange body 31 in the second direction Y, the plurality of heat exchange channels 301 are spaced along the third direction Z, in the second direction Y, a dimension of the connection portion 3211 is smaller than a dimension of the plugging portion 3212, and the first direction X, the second direction Y, and the third direction Z are perpendicular to each other.

With the above structure, on a cross-sectional plane of the heat exchange body 31 taken perpendicular to the first direction X, the cross-section of the heat exchange body 31 may be rectangular. By way of example, the cross-section of the heat exchange body 31 may be elongated (see FIG. 6). Through the above structure, the heat exchange body 31 may be a plate-like structural member with a relatively small thickness and a relatively small volume, thereby saving space. When the heat exchange assembly 30 exchanges heat with the battery cell assembly 20, an end face of the heat exchange body 31 located in the second direction Y may be in close contact with a surface of the battery cell 21 for heat exchange providing a larger heat exchange surface. Therefore, the space inside the enclosure 10 can be saved, a larger-volume battery cell assembly 20 can be arranged, or other electrical components can be conveniently arranged.

"In the second direction Y, a dimension of the connection portion 3211 is smaller than a dimension of the plugging portion 3212" may be understood as that in the second direction Y, one end face of the connection portion 3211 may be aligned with the end of the plugging portion 3212, or two end faces of the connection portion 3211 are not aligned with the end of the plugging portion 3212. By way of example, referring to FIG. 8, in the second direction Y, two end faces of the connection portion 3211 are not aligned with the end of the plugging portion 3212.

Each plugging portion 3212 has a region not covered by the connection portion 3211. In this way, during formation of the adapter member 323 on the heat exchange body 31, each plugging portion 3212 can have a larger bonding surface with the adapter member 323, such that the plugging member 321 as an entirety has a larger bonding surface with the adapter member 323, thereby improving the connection strength and reliability. Moreover, more of an edge of each plugging portion 3212 cooperating with the heat exchange channel 301 is exposed, and the adapter member 323 can cover more edge positions of the plugging portion 3212 during the formation.

In the above technical solution, the heat exchange body 31 may be formed as a plate-like structure with a small thickness, and is more easily in contact with a surface of the battery cell assembly 20 for heat exchange, thereby helping to save space inside the enclosure 10. In this way, a larger arrangement space can be provided for the battery cell assembly 20, thereby improving the energy density of the battery apparatus 100. A larger arrangement space can also be provided for other electrical components, facilitating mounting of components inside the enclosure 10, reducing the mounting difficulty, and facilitating maintenance and repair. Each plugging portion 3212 has a region not covered by the connection portion 3211. During formation of the adapter member 323 on the heat exchange body 31, each plugging portion 3212 can have a larger bonding surface with the adapter member 323, such that the plugging member 321 as an entirety has a larger bonding surface with the adapter member 323, thereby improving the connection strength and reliability. Moreover, more of an edge of each plugging portion 3212 cooperating with the heat exchange channel 301 is exposed, such that the adapter member 323 can cover more of the edge of the plugging portion 3212 during formation, thereby enhancing the plugging and sealing effect of the plugging portion 3212 on the heat exchange channel 301, and thus improving the reliability of the heat exchange assembly 30 and improving the reliability of the battery apparatus 100.

In some embodiments of the present application, referring to FIG. 8 to FIG. 14, a relief groove 3211a is provided on a side of the connection portion 3211 close to the heat exchange body 31, and relief grooves 3211a are provided at positions of the connection portion 3211 corresponding to channel wall 302 between any adjacent two heat exchange channels 301, the relief grooves 3211a abutting against the channel wall 302.

In the above technical solution, the relief groove 3211a can abut against the channel wall 302 to play a limiting role, reducing the risk of displacement of the plugging portion 3212 due to a force acting on the connection portion 3211 and the plugging portion 3212 during formation of the adapter member 323, which can improve the reliability of mounting the plugging portion 3212 in the heat exchange channel 301, thereby enhancing the plugging effect of the plugging portion 3212 on the heat exchange channel 301.

In some embodiments of the present application, referring to FIG. 8 to FIG. 13, the connection portion 3211 and the plugging portion 3212 are detachably connected. The detachable connection mode between the connection portion 3211 and the plugging portion 3212 may include, but is not limited to, snap connection, screw connection, or insertion connection.

It can be understood that since the thickness of the heat exchange body 31 is usually small, compared with manufacturing the plugging member 321 by an integral forming method, by adopting the above solution, the connection portion 3211 and the plugging portion 3212 can be manufactured separately. After the connection portion 3211 and the plugging portion 3212 are manufactured separately, the two are assembled, thereby reducing the manufacturing difficulty of the plugging member 321, improving the product yield, and when one of the connection portion 3211 and the plugging portion 3212 is damaged, only the damaged part needs to be replaced, thereby reducing the cost of use.

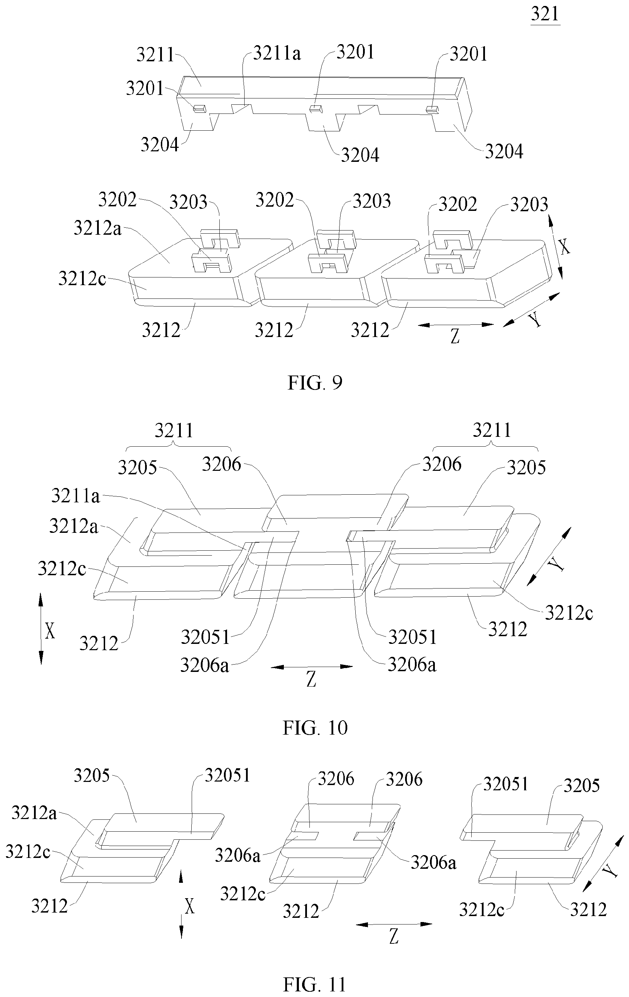

In some embodiments of the present application, referring to FIG. 8 and FIG. 9, one of the connection portion 3211 and the plugging portion 3212 is provided with a snap protrusion portion 3201, and the other is provided with a snap groove portion 3202, where the snap groove portion 3202 and the snap protrusion portion 3201 are snap-fitted with each other.

The snap protrusion portion 3201 may refer to a protruding structure such as a protrusion, a boss, or a snap hook. The snap groove portion 3202 may refer to a groove structure capable of cooperating with the snap protrusion portion 3201 to play a connection role. By way of example, referring to FIG. 8 and FIG. 9, the snap groove portion 3202 may be a bracket, and a snap groove is formed on the bracket.

The connection portion 3211 may be provided with the snap protrusion portion 3201, and the plugging portion 3212 is provided with the snap groove portion 3202. The snap groove portion 3202 and the snap protrusion portion 3201 may be snap-fitted with each other. The snap protrusion portion 3201 may be provided at a position of the connection portion 3211 directly opposite to and close to the plugging portion 3212, and the snap groove portion 3202 is provided at a position of the plugging portion 3212 directly opposite to and close to the connection portion 3211. Alternatively, the snap protrusion portion 3201 may be provided on one side, two sides, three sides, or four sides of the connection portion 3211, without being limited thereto, and the snap groove portion 3202 is provided at a position of the plugging portion 3212 corresponding to the snap protrusion portion 3201. By way of example, referring to FIG. 8 and FIG. 9, the snap protrusion portion 3201 is provided on two sides of the connection portion 3211 in the second direction Y, and two snap groove portions 3202 are provided on the plugging portion 3212 along the second direction Y.

The connection portion 3211 may also be provided with the snap groove portion 3202, and the plugging portion 3212 is provided with the snap protrusion portion 3201. The snap groove portion 3202 and the snap protrusion portion 3201 may be snap-fitted with each other. The snap protrusion portion 3201 may be provided at a position of the plugging portion 3212 directly opposite to and close to the connection portion 3211, and the snap groove portion 3202 is provided at a position of the connection portion 3211 directly opposite to and close to the plugging portion 3212. One, two, three, four, or more snap protrusion portions 3201 on the plugging portion 3212 may be provided, without being limited thereto, and the snap groove portion 3202 is provided on the connection portion 3211 at a position corresponding to the snap protrusion portion 3201.

In the above technical solution, the connection portion 3211 and the plugging portion 3212 may be snap-fitted with each other through the snap groove portion 3202 and the snap protrusion portion 3201. The above detachable connection structure has a relatively simple structure, facilitates mounting and detachment, and provides reliable connection, thereby improving the connection reliability between the connection portion 3211 and the plugging portion 3212.

In some embodiments of the present application, referring to FIG. 8 and FIG. 9, the snap protrusion portion 3201 or the snap groove portion 3202 is provided at two opposite ends of the connection portion 3211.

The connection portion 3211 may be provided with the snap protrusion portion 3201. In this example, the snap protrusion portion 3201 may be provided at two opposite ends of the connection portion 3211. The snap groove portion 3202 may also be provided on the connection portion 3211. In this example, the snap groove portion 3202 may be provided at two opposite ends of the connection portion 3211. The two opposite ends of the connection portion 3211 may refer to two ends in the second direction Y, or two ends in the third direction Z.

By way of example, referring to FIG. 8 and FIG. 9, the snap protrusion portion 3201 is provided on the connection portion 3211, and the snap protrusion portion 3201 is provided at two ends of the connection portion 3211 in the second direction Y.

In the above technical solution, the two opposite ends of the connection portion 3211 can be connected to the plugging portion 3212 through engagement of the snap groove portion 3202 with the snap protrusion portion 3201. In this way, the connection portion 3211 and the plugging portion 3212 can be fixed at opposite sides thereof, thereby providing a more stable and balanced fixing effect and further improving the connection reliability between the connection portion 3211 and the plugging portion 3212.

In some embodiments of the present application, referring to FIG. 8 and FIG. 9, the snap protrusion portion 3201 is provided on the connection portion 3211, and the snap groove portion 3202 is provided on the plugging portion 3212.

In the above technical solution, since the plugging portion 3212 plugs the heat exchange channel 301, considering that the adapter member 323 is required to wrap around the heat exchange body 31, the size of the plugging portion 3212 is larger than that of the connection portion 3211, so providing the snap groove portion 3202 on the plugging portion 3212 can facilitate the processing of the snap groove portion 3202 and reduce the manufacturing difficulty.

In some embodiments of the present application, referring to FIG. 9, one of the connection portion 3211 and the plugging portion 3212 is provided with a guide groove 3203, and the other is provided with a guide post 3204, the guide post 3204 being disposed in the guide groove 3203.

The guide groove 3203 and the guide post 3204 may refer to structures capable of cooperating with each other to play a guiding function.

The connection portion 3211 may be provided with the guide groove 3203, and the plugging portion 3212 may be provided with the guide post 3204. Alternatively, the connection portion 3211 may be provided with the guide post 3204, and the plugging portion 3212 may be provided with the guide groove 3203 (see FIG. 9).

In the above technical solution, during connection, the positioning accuracy of the connection portion 3211 and the plugging portion 3212 can be improved through the guiding effect of the guide groove 3203 and the guide post 3204, thereby improving the success rate of engagement between the snap protrusion portion 3201 and the snap groove portion 3202, and thus improving the assembly efficiency.

In some embodiments of the present application, referring to FIG. 9, the guide post 3204 is provided on the connection portion 3211, and the guide groove 3203 is provided on the plugging portion 3212.

In the above technical solution, since the plugging portion 3212 plugs the heat exchange channel 301, considering that the adapter member 323 is required to wrap around the heat exchange body 31, the plugging portion 3212 has a larger dimension than the connection portion 3211. Therefore, providing the guide groove 3203 on the plugging portion 3212 may facilitate the processing of the guide groove 3203 and reduce the manufacturing difficulty.

In some embodiments of the present application, referring to FIG. 10 to FIG. 13, any adjacent two plugging portions 3212 are detachably connected through the connection portion 3211.

It can be understood that a connection portion 3211 may be provided between any adjacent two plugging portions 3212, and the adjacent two plugging portions 3212 are connected through the connection portion 3211. By way of example, referring to FIG. 10 to FIG. 13, there are three plugging portions 3212 and two connection portions 3211, and adjacent two plugging portions 3212 are detachably connected through the connection portion 3211.

In the above technical solution, when the number of plugging portions 3212 is relatively large, a plurality of plugging portions 3212 can be sequentially connected together through a plurality of connection portions 3211, the connection mode is more flexible, and each plugging portion 3212 and connection portion 3211 is easier to operate during assembly, thereby reducing the assembly difficulty. When a fault occurs in a heat exchange channel 301 corresponding to a certain plugging portion 3212, the connection between adjacent two plugging portions 3212 through the connection portion 3211 enables the faulty part to be processed more accurately. Only the connection portion 3211 and the plugging portion 3212 at the faulty position need to be detached, without detaching the connection portions 3211 and plugging portions 3212 at other positions. The operation scope is relatively small, which can reduce the maintenance difficulty, reduce the risk of causing interference to other normally operating plugging portions 3212, and help to save maintenance costs and material costs. When the heat exchange capacity of the heat exchange assembly 30 needs to be adjusted, such as adjusting the number of heat exchange channels 301 participating in heat exchange, the above solution can facilitate starting or closing a single heat exchange channel 301 or some heat exchange channels 301, and flexible adjustment can be made by detaching or mounting the connection portion 3211 according to actual heat exchange requirements. There are few restrictions during adjustment, which is beneficial to the flexible adjustment of the heat exchange channels 301 in the heat exchange body 31.

In some embodiments of the present application, referring to FIG. 10 and FIG. 11, the connection portion 3211 includes a first part 3205 and a second part 3206, the first part 3205 and the second part 3206 are detachably connected, the first part 3205 is connected to one of two adjacent plugging portions 3212, and the second part 3206 is connected to the other of the two adjacent plugging portions 3212.

In the above technical solution, by configuring the connection portion 3211 into a two-part structure and respectively arranging the two parts on adjacent two plugging portions 3212, the two adjacent plugging portions 3212 can be detachably connected through the first part 3205 and the second part 3206. The plugging portion 3212 does not need to be provided with a structure for detachable engagement, such as a snap groove or a snap protrusion, thereby reducing structural damage to the plugging portion 3212 and ensuring structural reliability of the plugging portions 3212 themselves. Thus, the plugging effect of the plugging portion 3212 on the heat exchange channel 301 can be enhanced, and the structure of the plugging portion 3212 can be simplified, thereby reducing the manufacturing cost.

In some embodiments of the present application, one of the two adjacent plugging portions 3212 is integrally formed with the first part 3205, and the other is integrally formed with the second part 3206.

The integral forming methods for the first part 3205 and the corresponding plugging portion 3212, as well as the second part 3206 and the corresponding plugging portion 3212, may be, but are not limited to, injection molding, die casting, or 3D printing.

In the above technical solution, by integrally forming the first part 3205 with the corresponding plugging portion 3212, the number of components can be reduced, assembly steps can be reduced, and the assembly efficiency of the heat exchange assembly 30 can be improved. Moreover, the first part 3205 and the corresponding plugging portion 3212 can be integrally formed as a single piece, thereby improving the overall structural strength and improving the reliability of the plugging member 321. Integrally forming the second part 3206 with the corresponding plugging portion 3212 can also reduce the number of components, reduce assembly steps, and improve the assembly efficiency of the heat exchange assembly 30. Moreover, the second part 3206 and the corresponding plugging portion 3212 can be integrally formed as a single piece, thereby improving the overall structural strength and improving the reliability of the plugging member 321.

In some embodiments of the present application, referring to FIG. 10 and FIG. 11, the first part 3205 is provided with a first insertion portion 32051 extending out of the plugging portion 3212, and the second part 3206 is provided with a first insertion slot 3206a. The first insertion slot 3206a and the first insertion portion 32051 are in insertion engagement with each other, and the first insertion portion 32051 and the first insertion slot 3206a extend along the arrangement direction of the at least two plugging portions 3212.

In the above technical solution, the first part 3205 may be in insertion engagement with the first insertion slot 3206a of the second part 3206 through the first insertion portion 32051, thereby detachably connecting the two adjacent plugging portions 3212. This detachable mode is simple to operate and easy to implement, thereby improving detachment and assembly efficiency and reducing costs.

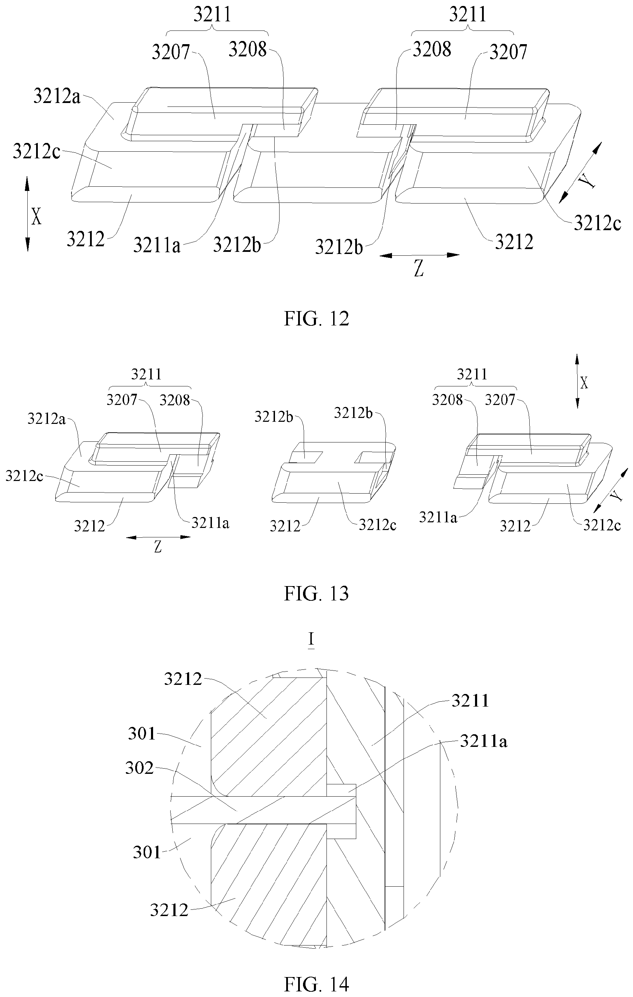

In some embodiments of the present application, referring to FIG. 12 and FIG. 13, the connection portion 3211 is connected to one of two adjacent plugging portions 3212, and includes an extension portion 3207 and a second insertion portion 3208. The extension portion 3207 is connected to the plugging portion 3212 and extends toward the other of the two adjacent plugging portions 3212. The second insertion portion 3208 is provided on the extension portion 3207. The other of the two adjacent plugging portions 3212 is provided with a second insertion slot 3212b, and the second insertion slot 3212b and the second insertion portion 3208 are in insertion engagement with each other.

The extension portion 3207 may refer to an elongated component. The second insertion portion 3208 may refer to a component capable of playing an insertion role, for example, the second insertion portion 3208 may be an insertion block.

The second insertion slot 3212b may refer to a groove structure capable of cooperating with the second insertion portion 3208. The shape of the second insertion slot 3212b may match the shape of the second insertion portion 3208, and may be, but is not limited to, an L shape or a T shape. By way of example, referring to FIG. 13, the second insertion portion 3208 and the second insertion slot 3212b are T-shaped.

In the above technical solution, the two adjacent plugging portions 3212 may be connected together through the insertion engagement between the second insertion portion 3208 and the second insertion slot 3212b. This detachable mode is simple to operate, and since the second insertion slot 3212b is provided on the plugging portion 3212, the combination of the connection portion 3211 and the plugging portion 3212 is relatively firm, and the connection reliability is improved.

In some embodiments of the present application, referring to FIG. 13, the second insertion portion 3208 is provided at an end of the extension portion 3207 facing away from the manifold 322.

In the above technical solution, the second insertion portion 3208 is provided at the end of the extension portion 3207, whereby the overall structure of the connection portion 3211 can be made more compact, the size of the connection portion 3211 can be reduced, and the weight can be reduced, helping to improve the energy density of the battery apparatus 100.

In some embodiments of the present application, the connection portion 3211 and the corresponding plugging portion 3212 are integrally formed.

In the above solution, the integral forming manner of the connection portion 3211 and the corresponding plugging portion 3212 may be, but is not limited to, injection molding, die casting, or 3D printing.

In the above technical solution, the connection portion 3211 and the corresponding plugging portion 3212 are integrally formed, which can also reduce the number of components, reduce assembly steps, and improve the assembly efficiency of the heat exchange assembly 30. Moreover, the connection portion 3211 and the corresponding plugging portion 3212 can be integrally formed as a single piece, improving the overall structural strength and improving the reliability of the plugging member 321.

In some embodiments of the present application, the connection portion 3211 and the at least two plugging members 321 are integrally formed.

It can be understood that the connection portion 3211 is connected to all the plugging members 321, and the connection portion 3211 and all the plugging members 321 are integrally formed as a single piece. The integral forming manner of the connection portion 3211 and the at least two plugging members 321 may be, but is not limited to, injection molding, die casting, or 3D printing.

In the above technical solution, adopting such a structure can reduce the number of components, reduce assembly steps, and improve the assembly efficiency of the heat exchange assembly 30. Moreover, the connection portion 3211 and the at least two plugging portions 3212 can be integrally formed as a single piece, improving the overall structural strength and improving the reliability of the plugging member 321.

In some embodiments of the present application, the adapter member 323 is integrally injection-molded on the heat exchange body 31.

It can be understood that the adapter member 323 may be manufactured on the heat exchange body 31 by means of injection molding, and the injection molding referred to here may be, but is not limited to, overmolding. For example, a mandrel may be pre-inserted into the heat exchange channels 301 of the heat exchange body 31 that do not need to be plugged, and then molds required for injection molding the adapter member 323 are disposed at two ends of the heat exchange body 31 in the first direction X. By injecting an injection molding liquid into the molds and cooling the injection molding liquid, the adapter member 323 may be obtained, whereby the formed adapter member 323 and the heat exchange body 31 are connected more tightly and firmly, and are less likely to detach.

The adapter member 323 may be made of a plastic material, and the manifold 322 may also be made of a plastic material. After being molded, the adapter member 323 may be fixed to the manifold 322 by welding through heat fusion of the plastic material.

The adapter member 323 may alternatively be partially made of a plastic material and partially made of a metal material, and the manifold 322 is made of a metal material. For example, the metal material part of the adapter member 323 may be pre-placed in a mold, and the plastic material part of the adapter member 323 may be obtained by injection molding. After the adapter member 323 is molded, the metal material part thereof may be connected to the manifold 322 by welding.

In the above technical solution, the adapter member 323 is injection-molded on the heat exchange body 31. The adapter member 323 can be formed at a relatively high speed and is suitable for large-scale automated production, thereby improving production efficiency. This manner can also enable the adapter member 323 to have high dimensional accuracy and high surface quality, thereby improving the forming quality of the adapter member 323 and the connection reliability among the heat exchange body 31, the adapter member 323, and the manifold 322, and further improving the reliability of the battery apparatus 100.

In some embodiments of the present application, referring to FIG. 8 to FIG. 13, the circumferential surface 3212c of the plugging portion 3212 surrounding the first direction X is in abutting cooperation with the inner wall of the heat exchange channel 301.

It can be understood that the circumferential surface 3212c of the plugging portion 3212 and the inner wall of the heat exchange channel 301 may be in transition fit or interference fit. The above solution can reduce the risk of gaps being formed between the circumferential surface 3212c and the inner wall of the heat exchange channel 301, reduce the probability that the material enters the gaps during formation of the adapter member 323, resulting in failure to form the adapter member 323. Therefore, the forming quality of the adapter member 323 can be improved, and the connection reliability among the heat exchange body 31, the adapter member 323, and the manifold 322 can be improved. The above solution can also enable the plugging portion 3212 to play a supporting role in the heat exchange channel 301, reduce the probability of large deformation of the heat exchange body 31, and improve the operation reliability of the heat exchange assembly 30.

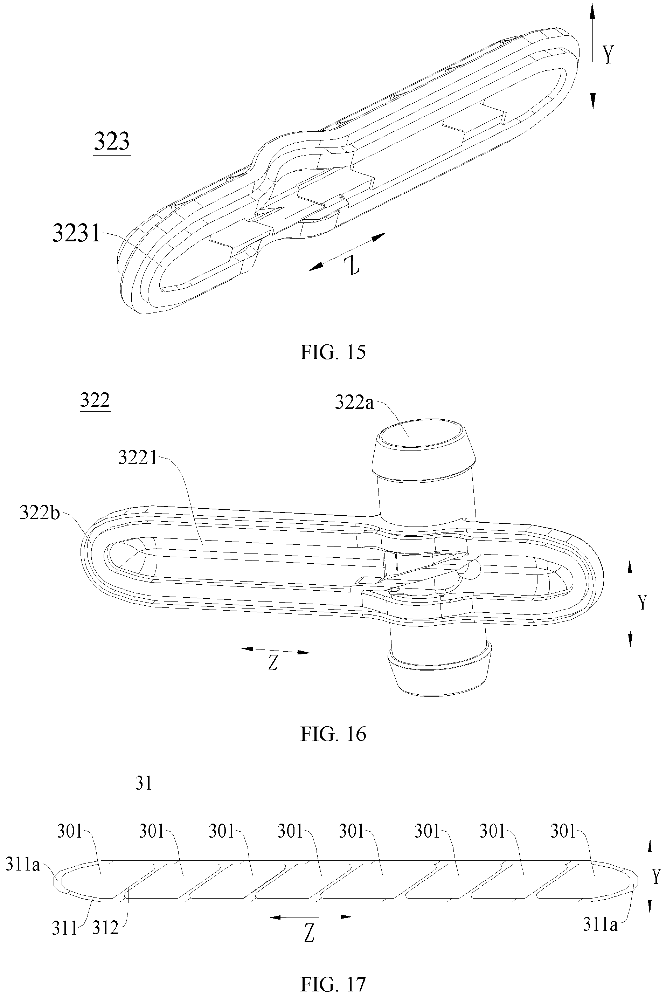

In some embodiments of the present application, referring to FIG. 15, a part of the adapter member 323 close to the manifold 322 is configured as a weldable portion 3231, and the weldable portion 3231 is welded to the manifold 322.

The weldable portion 3231 may refer to a part of the structure of the adapter member 323 that is welded to the manifold 322.

By way of example, the adapter member 323 may be made of a plastic material and injection-molded on the heat exchange body 31. In this case, a part of the adapter member 323 close to the manifold 322 forms a weldable portion 3231. The manifold 322 may also be made of a plastic material, and the weldable portion 3231 can be connected to the manifold 322 by welding and melting.

By way of example, the adapter member 323 may alternatively be made of a metal material and cast-formed on the heat exchange body 31. In this case, a part of the adapter member 323 close to the manifold 322 forms a weldable portion 3231, and the weldable portion 3231 is connected to the manifold 322 by welding.

In the above technical solution, the adapter member 323 is connected to the manifold 322 through the weldable portion 3231 by welding, which can improve the connection strength between the adapter member 323 and the manifold 322 and improve connection reliability, thereby improving the overall reliability of the heat exchange assembly 30.

In some embodiments of the present application, referring to FIG. 15 and FIG. 16, the weldable portion 3231 is an annular structure disposed along the circumference of the adapter member 323, and a recess 322b is provided at an end of the manifold 322 close to the adapter member 323. The recess 322b is an annular structure extending around the circumference of the manifold cavity 3221, and the weldable portion 3231 is disposed in the recess 322b.

The recess 322b may refer to a ring-shaped groove provided on the manifold 322. The shape of the recess 322b may match the shape of the weldable portion 3231.

In the above technical solution, the weldable portion 3231 may be embedded into the recess 322b of the manifold 322, such that the adapter member 323 can be pre-positioned and mounted to the manifold 322. In this way, a relatively accurate relative position between the adapter member 323 and the manifold 322 can be achieved before the adapter member 323 and the manifold 322 are connected, facilitating subsequent welding, bonding, or connection in other manners between the adapter member 323 and the manifold 322. In addition, the pre-tightening force between the adapter member 323 and the manifold 322 before connection can be increased, and the overall structural strength of the adapter member 323 and the manifold 322 after connection can be improved, thereby enhancing connection stability, helping to improve the reliability of the heat exchange assembly 30, providing more reliable heat exchange for the battery cell assembly 20, and improving the reliability of the battery apparatus 100.

In some embodiments of the present application, referring to FIG. 6 and FIG. 17, the heat exchange body 31 includes a shell 311 and partition plates 312, two ends of the shell 311 in the first direction X are open, a dimension of the shell 311 in the second direction Y is smaller than a dimension of the shell 311 in the third direction Z, and the third direction Z, the second direction Y, and the first direction X are perpendicular to each other. A plurality of partition plates 312 are provided, the plurality of partition plates 312 are disposed in the shell 311, and the partition plates 312 are inclined relative to the second direction Y, the heat exchange channels 301 are formed between the partition plate 312 and a wall of the shell 311 and between any adjacent two partition plates 312.

The partition plate 312 may be a thin plate member for separation inside the shell 311. Optionally, in the first direction X, the dimension of the partition plate 312 and the dimension of the shell 311 may be equal, and two ends of the partition plate 312 in the second direction Y may be connected to the inner walls of the heat exchange channel 301.

"A dimension of the shell 311 in the second direction Y is smaller than a dimension of the shell 311 in the third direction Z", whereby a cross-section of the shell 311 perpendicular to the first direction X is rectangular. Optionally, the rectangle may be elongated, such that the shell 311 forms a shell-like structure with a relatively small thickness, thereby saving space.

"The partition plates 312 are inclined relative to the second direction Y" may be understood as follows: the partition plates 312 in the shell 311 can not only play a role of partitioning the internal space of the shell 311 to form the heat exchange channels 301, but also play a role of diagonal ribs, thereby improving the overall structural strength and rigidity of the heat exchange body 31.

The heat exchange body 31 composed of the shell 311 and the plurality of partition plates 312 may have a "harmonica tube" structure, which is simple in structure and easy to manufacture. The shell 311 and the plurality of partition plates 312 may be integrally formed or separately provided, which is not specifically limited herein.

In the above technical solution, by configuring the heat exchange body 31 to include the shell 311 and the partition plates 312, the heat exchange body 31 as a whole can form a shell-like structure with a small thickness, which has a small volume while providing a high heat exchange effect, thereby saving space inside the enclosure 10. The partition plates 312 can also form diagonal ribs inside the shell 311, which can improve the overall strength of the heat exchange body 31, reduce the risk of large deformation of the shell 311, and improve the reliability of the heat exchange body 31, thereby improving the reliability of the battery apparatus 100.

In some embodiments of the present application, the shell 311 and the partition plates 312 are integrally formed. In this technical solution, the shell 311 and the partition plates 312 are integrally formed, which can reduce the number of components and assembly steps, thereby improving production efficiency. The above solution can also improve the overall strength and rigidity of the heat exchange body 31, reduce the risk of large deformation or damage of the heat exchange body 31, improve the service reliability of the heat exchange body 31, and further improve the reliability of the heat exchange assembly 30, thereby improving the reliability of the battery apparatus 100.

In some embodiments of the present application, referring to FIG. 17, shell walls of the shell 311 located at two ends in the third direction Z are configured as arcuate walls 311a. In this technical solution, the arcuate walls 311a can alleviate the stress concentration problem at the two ends of the shell 311 in the third direction Z, thereby improving the reliability of the shell 311.

In some embodiments of the present application, on a section perpendicular to the first direction X, the cross-sectional shape of the heat exchange channel 301 is the same as the cross-sectional shape of the plugging member 321.

In the above technical solution, through the same cross-sectional shape of the heat exchange channel 301 and the plugging member 321, the plugging member 321 may be in good contact with the inner wall of the heat exchange channel 301, thereby helping the sealing of the plugging member 321 in the heat exchange channel 301, reducing the risk of gaps being formed. In addition, the plugging member 321 can uniformly bear pressure in all directions inside the heat exchange channel 301, thereby helping to maintain a sealed state between the plugging member 321 and the inner wall of the heat exchange channel 301. Since the heat exchange channel 301 and the plugging member 321 have the same cross-sectional shape, the plugging member 321 can further play a supporting role inside the heat exchange channel 301, thereby reducing the risk of large deformation of the heat exchange body 31 due to stress. This helps to reduce the risk of reduction in the flow cross-section of the heat exchange channel 301, such that the heat exchange reliability of the heat exchange body 31 can be improved.

In some embodiments of the present application, the heat exchange body 31 is a metal material member or a non-metal material member; and/or, the manifold 322 is a metal material member or a non-metal material member.

It can be understood that the heat exchange body 31 may be a metal material member or a non-metal material member; and the manifold 322 may be a metal material member or a non-metal material member. The metal material member may include, but is not limited to, copper, copper alloy, or aluminum alloy, and the non-metal material may include, but is not limited to, plastic or ceramic. The heat exchange body 31 and the manifold 322 may be made of the same material or different materials.

In particular, when the heat exchange body 31 and the manifold 322 are made of different materials, for example, when the heat exchange body 31 is made of a metal material and the manifold 322 is made of a non-metal material, or when the heat exchange body 31 is made of a non-metal material and the manifold 322 is made of a metal material, by overmolding the adapter member 323 on the heat exchange body 31 and the manifold 322, connection between the heat exchange body 31 and the manifold 322 of different materials can be facilitated, thereby reducing the mounting difficulty of the heat exchange body 31 and the manifold 322 and improving the connection reliability between the heat exchange body 31 and the manifold 322.

In this technical solution, as a metal material member, the heat exchange body 31 can have better thermal conductivity, thereby helping to improve heat exchange efficiency. Alternatively, the heat exchange body 31 may be a non-metal material member, thereby helping to reduce costs while meeting thermal conductivity performance. As a metal material member, the manifold 322 can have high rigidity and strength, thereby reducing the risk of damage. As a non-metal material member, the manifold 322 can reduce costs under the premise of meeting rigidity and strength requirements. By configuring the heat exchange body 31 and the manifold 322 to be made of the above materials, more choices can be provided, thereby achieving higher flexibility.

An embodiment of the present application provides an electrical apparatus 1000, including the battery apparatus 100 according to any of the preceding embodiments, where the battery apparatus 100 is configured to store or provide electrical energy.

In the above technical solution, since the battery apparatus 100 has high reliability, adopting the battery apparatus 100 to store or provide electrical energy improves reliability of electricity use, and further improves the service reliability of the electrical apparatus 1000.

### Embodiment I

Referring to FIG. 3 to FIG. 9, a battery apparatus 100 according to this embodiment of the present application includes an enclosure 10, a battery cell assembly 20, and a heat exchange assembly 30.

The battery cell assembly 20 is accommodated in the enclosure 10, and includes a plurality of rows of battery cells 21, and a plurality of battery cells 21 are arranged in each row. The heat exchange assembly 30 is accommodated in the enclosure 10 to exchange heat with the battery cell assembly 20.

The heat exchange assembly 30 is accommodated in the enclosure 10 and exchanges heat with the battery cell assembly 20. The heat exchange assembly 30 includes a heat exchange body 31 and manifold structures 32.

The heat exchange body 31 is a harmonica tube cold plate, a dimension of the harmonica tube cold plate in the first direction X is greater than a dimension in the third direction Z, and the dimension of the harmonica tube cold plate in the third direction Z is greater than a dimension in the second direction Y, where the first direction X is the length direction of the heat exchange body 31. The heat exchange body 31 includes a plurality of heat exchange channels 301 extending along the first direction X.

The manifold structures 32 are disposed at two ends of the heat exchange body 31 in the first direction X. The manifold structure 32 includes a plugging member 321, an adapter member 323, and a manifold 322.

The plugging member 321 includes a connection portion 3211 and three plugging portions 3212. The three plugging portions 3212 are connected through one connection portion 3211, and the three plugging portions 3212 are configured to be fitted into three heat exchange channels 301. The connection portion 3211 is provided with snap protrusion portions 3201 at two ends in the second direction Y, and the plugging portion 3212 is provided with two snap groove portions 3202 spaced along the second direction Y. The snap groove portion 3202 is configured as a bracket, and a snap groove is formed on the bracket. The snap groove portion 3202 may be snap-fitted with the snap protrusion portion 3201. The connection portion 3211 is further provided with a guide post 3204, and the plugging portion 3212 is provided with a guide groove 3203. The guide groove 3203 may cooperate with the guide post 3204 for connection.

The adapter member 323 is injection-molded on the heat exchange body 31 and partially wraps around an outer peripheral surface of the heat exchange body 31. A manifold cavity 3221 is formed inside the manifold 322. The manifold 322 is sealingly engaged with and connected to the heat exchange body 31 through the adapter member 323 to communicate the manifold cavity 3221 with the heat exchange channels 301. The manifold 322 is provided with a communication port 322a communicating with the manifold cavity 3221, and the communication port 322a is configured for entry and exit of a heat exchange medium, such that the heat exchange medium is allowed to flow between the manifold cavity 3221 and the heat exchange channels 301.

### Embodiment II

Referring to FIG. 3 to FIG. 7, FIG. 10, and FIG. 11, a battery apparatus 100 is provided according to this embodiment of the present application. The structure of the battery apparatus 100 in Embodiment II is substantially the same as that of the battery apparatus 100 of Embodiment I, except that:
Every two adjacent plugging portions 3212 of the three plugging portions 3212 are connected through the connection portion 3211. The connection portion 3211 includes a first part 3205 and a second part 3206. Among the three plugging portions 3212, those located at two ends are provided with the first part 3205, and the one located at a middle position is provided with the second part 3206. The first part 3205 is provided with a first insertion portion 32051 extending out of the plugging portion 3212, and the second part 3206 is provided with a first insertion slot 3206a, and the first insertion slot 3206a and the first insertion portion 32051 are in insertion engagement with each other.

### Embodiment III

Referring to FIG. 3 to FIG. 7, FIG. 12, and FIG. 13, a battery apparatus 100 is provided according to this embodiment of the present application. The structure of the battery apparatus 100 in Embodiment III is substantially the same as that of the battery apparatus 100 of Embodiment II, except that:
Every two adjacent plugging portions 3212 of the three plugging portions 3212 are connected through the connection portion 3211. Among the three plugging portions 3212, those located at two ends are provided with the connection portion 3211. The connection portion 3211 includes an extension portion 3207 and a second insertion portion 3208. The extension portion 3207 connects the plugging portion 3212 and extends toward the plugging portion 3212 located at the middle position. The plugging portion 3212 located at the middle position is provided with a second insertion slot 3212b, and the second insertion slot 3212b and the second insertion portion 3208 are in insertion engagement with each other.

It should be noted that, in the case of no conflict, the embodiments in the present application and the features in the embodiments can be combined with each other. The above are only preferred embodiments of the present application and are not intended to limit the present application. For those skilled in the art, unless otherwise specified, all implementations and optional implementations of the present application can be combined with each other to form new technical solutions. Unless otherwise specified, all technical features and optional technical features of the present application can be combined with each other to form new technical solutions. Any modifications, equivalent replacements, improvements, and the like made within the spirit and principle of the present application shall be included in the protection scope of the present application.

## Claims

1. A battery apparatus, comprising:
an enclosure;
a battery cell assembly, accommodated in the enclosure; and
a heat exchange assembly, accommodated in the enclosure and exchanging heat with the battery cell assembly, wherein the heat exchange assembly comprises:
a heat exchange body, comprising a plurality of heat exchange channels extending along a first direction; and
manifold structures, disposed at two ends of the heat exchange body in the first direction, wherein the manifold structure comprises a plugging member, an adapter member, and a manifold, wherein:
the plugging member comprises a connection portion and at least two plugging portions, wherein the at least two plugging portions are connected through the connection portion, and the at least two plugging portions are configured to be fitted into at least two heat exchange channels;
the adapter member is formed on the heat exchange body; and
a manifold cavity is formed inside the manifold, the manifold is sealingly engaged with and connected to the heat exchange body through the adapter member to communicate the manifold cavity with the heat exchange channels, and the manifold is provided with a communication port communicating with the manifold cavity, wherein the communication port is configured for entry and exit of a heat exchange medium, such that the heat exchange medium is allowed to flow between the manifold cavity and the heat exchange channels.

2. The battery apparatus according to claim 1, wherein the plugging portion has an outer side surface close to the manifold, and on a reference plane parallel to the outer side surface, an area of an orthographic projection of the connection portion on the reference plane is smaller than an area of the outer side surface.

3. The battery apparatus according to claim 2, wherein:
a dimension of the heat exchange body in the first direction and a dimension of the heat exchange body in a third direction are both greater than a dimension of the heat exchange body in a second direction;
the plurality of heat exchange channels are spaced apart along the third direction; and
in the second direction, a dimension of the connection portion is smaller than a dimension of the plugging portion,
wherein the first direction, the second direction, and the third direction are perpendicular to each other.

4. The battery apparatus according to any one of claims 1 to 3, wherein the connection portion and the plugging portion are detachably connected.

5. The battery apparatus according to claim 4, wherein one of the connection portion and the plugging portion is provided with a snap protrusion portion, and the other is provided with a snap groove portion, wherein the snap groove portion and the snap protrusion portion are snap-fitted with each other.

6. The battery apparatus according to claim 5, wherein the snap protrusion portion or the snap groove portion is provided at two opposite ends of the connection portion.

7. The battery apparatus according to claim 5 or 6, wherein the snap protrusion portion is provided on the connection portion, and the snap groove portion is provided on the plugging portion.

8. The battery apparatus according to any one of claims 5 to 7, wherein one of the connection portion and the plugging portion is provided with a guide groove, and the other is provided with a guide post, wherein the guide post is disposed in the guide groove.

9. The battery apparatus according to claim 8, wherein the guide post is provided on the connection portion, and the guide groove is provided on the plugging portion.

10. The battery apparatus according to any one of claims 1 to 3, wherein any adjacent two plugging portions are detachably connected through the connection portion.

11. The battery apparatus according to claim 10, wherein the connection portion comprises a first part and a second part, wherein the first part and the second part are detachably connected, the first part is connected to one of two adjacent plugging portions, and the second part is connected to the other of the two adjacent plugging portions.

12. The battery apparatus according to claim 11, wherein one of the two adjacent plugging portions is integrally formed with the first part, and the other is integrally formed with the second part.

13. The battery apparatus according to claim 11 or 12, wherein the first part is provided with a first insertion portion extending out of the plugging portion, and the second part is provided with a first insertion slot, wherein the first insertion slot and the first insertion portion are in insertion engagement with each other, and the first insertion portion and the first insertion slot extend along the arrangement direction of the at least two plugging portions.

14. The battery apparatus according to claim 10, wherein:
the connection portion is connected to one of two adjacent plugging portions and comprises an extension portion and a second insertion portion, wherein the extension portion is connected to the plugging portion and extends toward the other of the two adjacent plugging portions, and the second insertion portion is provided on the extension portion; and
the other of the two adjacent plugging portions is provided with a second insertion slot, wherein the second insertion slot and the second insertion portion are in insertion engagement with each other.

15. The battery apparatus according to claim 14, wherein the second insertion portion is provided at an end of the extension portion facing away from the manifold.

16. The battery apparatus according to claim 14, wherein the connection portion and the corresponding plugging portion are integrally formed.

17. The battery apparatus according to any one of claims 1 to 3, wherein the connection portion and the at least two plugging members are integrally formed.

18. The battery apparatus according to any one of claims 1 to 3, wherein the adapter member is integrally injection-molded on the heat exchange body.

19. The battery apparatus according to any one of claims 1 to 3, wherein:
the heat exchange body is a metal material member or a non-metal material member; and/or
the manifold is a metal material member or a non-metal material member.

20. An electrical apparatus, comprising the battery apparatus according to any one of claims 1 to 19, wherein the battery apparatus is configured to store or provide electrical energy.
